# EUROPEAN PATENT SPECIFICATION

(11) **EP 2 325 851 B1**
(45) Date of publication and mention of the grant of the patent: **09.11.2016**
(21) Application number: 09812844.0
(22) Date of filing: 26.08.2009
(51) Int. Cl.: H01F 7/16, F16K 31/06, H01F 7/126, H01F 7/127

(54) **ADJUSTING SCREW STRUCTURE FOR OIL IMMERSED SOLENOID AND OIL IMMERSED SOLENOID WITH SAME**
STELLSCHRAUBENSTRUKTUR FÜR EINEN IN ÖL GETAUCHTEN ELEKTROMAGNETEN UND IN ÖL GETAUCHTER ELEKTROMAGNET DAMIT
STRUCTURE DE VIS DE RÉGLAGE DESTINÉE À UN SOLÉNOÏDE IMMERGÉ DANS L'HUILE, ET SOLÉNOÏDE IMMERGÉ DANS L'HUILE COMPORTANT CETTE STRUCTURE

(30) Priority: 11.09.2008 JP 2008233896
(43) Date of publication of application: 25.05.2011
(73) Proprietor: Kawasaki Jukogyo Kabushiki Kaisha, Kobe-shi, Hyogo 650-8670 (JP)
(72) Inventor: SHIMIZU, Hiroaki, Hyogo 651-2239 (JP)
(74) Representative: Leinweber & Zimmermann
(86) International application number: PCT/JP2009/004110
(87) International publication number: WO 2010/029695

(56) References cited:
- EP-A1- 0 428 728
- JP-A- S59 159 402
- JP-A- 2000 018 416
- JP-A- 2000 161 527
- JP-U- 3 080 172
- JP-U- 5 052 460
- JP-U- 61 044 811
- JP-U- 64 048 005
- US-B1- 6 460 567

## Description

### Technical Field

The present invention relates to an adjusting screw structure of an oil immersed solenoid used in an oil-pressure device, such as a valve device, used in a construction machinery or the like, and an oil immersed solenoid including the adjusting screw structure.

### Background Art

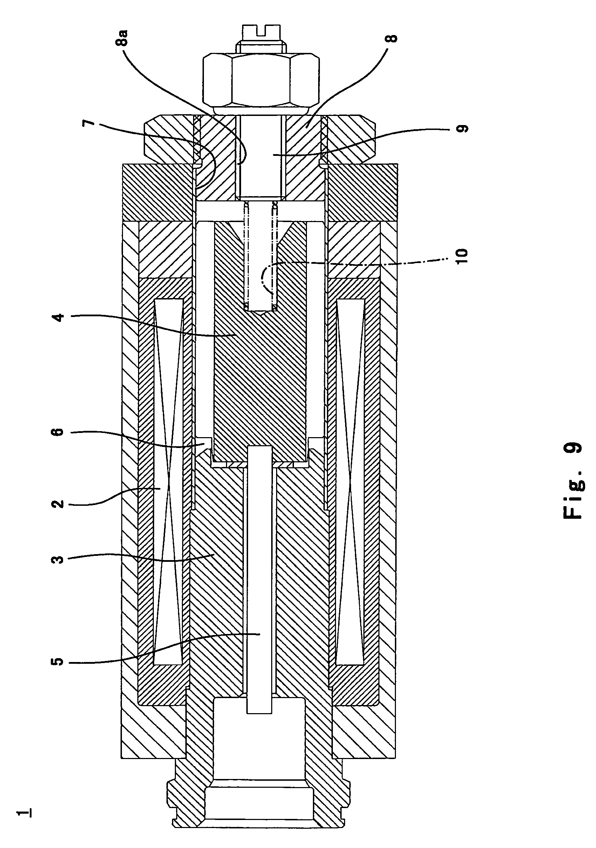

One example of such oil immersed solenoid is shown in Fig. 9. The oil immersed solenoid is used to control the oil pressure and flow rate of operating oil flowing in a valve device (not shown) that is, for example, an oil-pressure device. To be specific, in an oil immersed solenoid 1, when a command electric signal (exciting current) is transmitted to an exciting coil 2, suction force (suction force in a left direction in Fig. 9) corresponding to the magnitude of the command electric signal is generated at a fixed magnetic pole portion 3, and the fixed magnetic pole portion 3 can suction a movable core 4 by the suction force. When the movable core 4 is suctioned, a rod 5 provided at the movable core 4 presses, for example, a spool of the valve device (not shown) in the left direction in Fig. 9. This pressing force balances push-back force (push-back force in a right direction in Fig. 9) based on, for example, spring force or pilot pressure applied to the spool. The spool stops at a position where the pressing force and the push-back force are balanced. With this, the oil pressure and flow rate of the operating oil flowing in the valve device can be controlled so as to be proportional to the command electric signal.

However, if the air and the air bubbles exist in the oil, such as the operating oil, in the space 6 of the oil immersed solenoid 1, this may cause irregular change in movement acceleration of the movable core 4, and chattering of the movable core 4 may occur.

Here, in order to remove the air and the air bubbles in the space 6 of the solenoid 1, an adjusting screw 9 is provided to threadedly engage with a rear metal member 8 sealing a rear opening 7 of the solenoid 1 shown in Fig. 9, and the air and the air bubbles in the solenoid 1 can be removed by loosening or removing the adjusting screw 9.

Moreover, even among the standardized oil immersed solenoids 1 shown in Fig. 9, each solenoid 1 has its own characteristics, and the sizes of the parts constituting the solenoids 1 vary. Therefore, even if the same command electric signal is transmitted, the suction force of the fixed magnetic pole portion 3 varies, so that the pressure and flow rate of the operating oil in the valve device vary. Therefore, the variations of each of the pressure and flow rate need to be kept within an allowable range, which is a difficult problem. This is because the allowable range of the variations is generally narrow, and there is a certain limit to reduce the variations in size of each part.

Here, as shown in Fig. 9, an adjusting spring 10 is provided. The adjusting spring 10 is configured to bias the movable core 4 in the same direction as the suction force of the fixed magnetic pole portion 3, and the biasing force can be adjusted by the adjusting screw 9.

With this, when a predetermined command electric signal is transmitted to the solenoid 1, the biasing force of the adjusting spring 10 can be adjusted by the adjusting screw 9 in advance or accordingly such that each of the predetermined pressure and flow rate is proportional to the command electric signal and falls within a predetermined allowable range.

Another example of the oil immersed solenoid 1 is disclosed in Japanese Laid-Open Patent Application Publication No. 2006-140417 (see PTL 1 for example).

### Citation List

### Patent Literature

PTL 1: Japanese Laid-Open Patent Application Publication No. 2006-140417

JP S 59 159402 A discloses a spring holder having a function of adjusting the biasing force of a spring and a function of removing air. When the spring holder is loosened in order to remove the air, the biasing force of the spring needs to be readjusted.

### Summary of Invention

### Technical Problem

In accordance with the conventional oil immersed solenoid 1 shown in Fig. 9, the air and the air bubbles in the space 6 of the solenoid 1 can be removed by loosening the adjusting screw 9. However, once the adjusting screw 9 is loosened, in order to put the adjusting screw 9 back to the original adjustment position, the adjusting screw 9 needs to be operated again to readjust the adjusting spring 10.

Moreover, since the adjusting screw 9 cannot be surely put back to the original adjustment position, an error occurs between the biasing force of the adjusting spring 10 readjusted by the adjusting screw 9 and the original biasing force.

Further, in a case where the adjusting screw 9 is detached from the rear metal member 8 to remove the air, the adjusting spring 10 remains in the solenoid 1. However, in a case where the oil is supplied to the solenoid 1 to cause the air in the solenoid 1 to flow out, the adjusting spring 10 may be pushed out through the screw hole 8a to the outside of the solenoid 1, and the adjusting spring 10 may be lost. Then, when the operator inserts the adjusting spring 10 through the screw hole 8a into the solenoid 1 after the removal of the air, the adjusting spring 10 may be sandwiched between the adjusting screw 9 and an inner surface of the screw hole 8a.

Moreover, for example, when checking the operations of the oil immersed solenoid 1 before shipment, a reasonable work procedure is to check complete removal of the air and the air bubbles in the solenoid 1 and then adjusting the biasing force of the adjusting spring 10 by the adjusting screw 9. However, since this work procedure cannot be changed, workability may deteriorate.

Further, after the adjusting screw 9 is loosened to remove the air in the oil immersed solenoid 1, the adjusting spring 10 needs to be adjusted. In addition, in a state where the oil immersed solenoid 1 is mounted on the oil-pressure device, such as the valve device, it is difficult to adjust the biasing force of the adjusting spring 10. In view of these, it is difficult to remove the air by loosening the adjusting screw 9 in a state where the oil immersed solenoid 1 is mounted on the oil-pressure device. Therefore, there is a need for the oil immersed solenoid capable of solving this problem.

The present invention was made to solve the above problem, and an object of the present invention is to provide an adjusting screw structure of an oil immersed solenoid, the adjusting screw structure being capable of removing the air in the solenoid without causing an error in biasing force of the adjusting spring adjusted by the adjusting screw and easily adjusting the biasing force of the adjusting spring and removing the air, and an oil immersed solenoid including the adjusting screw structure.

### Solution to Problem

An adjusting screw structure of an oil immersed solenoid according to the present invention is an adjusting screw structure of an oil immersed solenoid in which: a movable core is provided in a space of a case so as to be movable in an axial direction; the movable core is biased by an adjusting spring in a direction in which the movable core is suctioned by a fixed magnetic pole portion or in an opposite direction thereof; and an adjusting screw capable of adjusting biasing force of the adjusting spring is included, the adjusting screw structure including an air-bleeding plug configured to be detachably attached to and seal an opening end portion of the case, the opening end portion being communicated with the space of the case, wherein the air-bleeding plug includes an internal screw portion with which the adjusting screw threadedly engages and a detachable mechanism configured to be able to attach the air-bleeding plug to the opening end portion of the case such that the air-bleeding plug is located at a predetermined attachment position in a movement direction of the adjusting screw.

In accordance with the adjusting screw structure of the oil immersed solenoid of the present invention, the biasing force of the adjusting spring can be adjusted by rotating the adjusting screw in a direction in which the adjusting screw is tightened or loosened. By adjusting the biasing force of the adjusting spring, it is possible to adjust the biasing force in a direction in which the movable core moves in a direction toward the fixed magnetic pole portion or in its opposite direction. With this, it is possible to adjust the oil pressure and flow rate of the operating oil or the like flowing in, for example, a valve device in which the oil immersed solenoid is used.

Then, by loosening the air-bleeding plug, the air and the air bubbles in the oil in the space of the case can be removed through the opening end portion of the case. Moreover, since the air-bleeding plug can be attached to the opening end portion of the case to be positioned at the predetermined attachment position in the movement direction of the adjusting screw and a positional relation between the adjusting screw and the air-bleeding plug does not change even when the air-bleeding plug is attached to and detached from the opening end portion, the adjusting screw can be put back to the original position by attaching the air-bleeding plug again. Therefore, the error of the biasing force of the adjusting spring adjusted by the adjusting screw does not occur, and the readjustment by the adjusting screw becomes unnecessary.

In the adjusting screw structure of the oil immersed solenoid according to the present invention, the detachable mechanism includes:
a detachable screw portion configured to attach the air-bleeding plug to the opening end portion of the case such that the air-bleeding plug threadedly engages with the opening end portion; an annular sealing portion configured to be attached to an annular groove formed on an outer peripheral surface of the air-bleeding plug; a sealing inclined surface configured to be formed in an annular shape on an inner peripheral surface of the opening end portion of the case, having an inner diameter increasing in size toward the opening, and tightly contacting the annular sealing portion when the air-bleeding plug is attached at an attachment position of the opening end portion; and an air-bleeding hole configured to be formed on the air-bleeding plug and allow the space of the case and an outside of the oil immersed solenoid to be communicated with each other when the air-bleeding plug is loosened.

In accordance with the detachable mechanism, the air-bleeding plug can be attached to the opening end portion of the case at the attachment position by the detachable screw portion so as to threadedly engage with the opening end portion. With the air-bleeding plug attached at the attachment position, the annular sealing portion attached to the outer peripheral surface of the air-bleeding plug tightly contacts the sealing inclined surface formed on the inner peripheral surface of the opening end portion of the case to seal the space of the case and prevent the oil in the case from leaking.

Then, when removing the air and the air bubbles in the oil in the space of the case, the air-bleeding plug is loosened. In this state, the air-bleeding hole formed on the air-bleeding plug can allow the space of the case and the outside of the oil immersed solenoid to be communicated with each other, so that the air and the like in the case can be removed through the air-bleeding hole. The sealing inclined surface has an inner diameter increasing in size toward the opening. Therefore, by loosening the air-bleeding plug, a gap is formed between the sealing inclined surface and the annular sealing portion, and the air and the like in the case can be efficiently discharged through the gap to the outside.

Moreover, the air-bleeding plug may be loosened, and the air and the like in the case can be removed without detaching the air-bleeding plug from the opening end portion. Therefore, the adjusting spring in the case does not flow out through the opening end portion together with the oil, and there is no possibility of losing the adjusting spring. Then, when the operator tightens the air-bleeding plug to the opening end portion of the case after the removal of the air, the adjusting spring is not sandwiched between the adjusting screw and the inner surface of the opening end portion.

In the adjusting screw structure of the oil immersed solenoid according to the present invention, the detachable mechanism may further include a pressing inclined surface configured to be formed in an annular shape on the inner peripheral surface of the opening end portion of the case, have an inner diameter increasing in size toward the opening, be located on an opening side of the sealing inclined surface, and press the annular sealing portion into the annular groove when the air-bleeding plug threadedly engages with the opening end portion of the case to be tightened into the opening end portion.

In accordance with the detachable mechanism, when the air-bleeding plug is tightened to threadedly engage with the opening end portion of the case, the pressing inclined surface formed in an annular shape on the inner peripheral surface of the opening end portion of the case can press the annular sealing portion attached to the annular groove into the annular groove. Then, when the air-bleeding plug is further tightened, the annular sealing portion attached to the air-bleeding plug can tightly contact the sealing inclined surface formed on the inner peripheral surface of the opening end portion of the case to seal the space in the case. As above, the air-bleeding plug can be attached to the opening end portion of the case with the annular sealing portion not protruding from the annular groove, and the sealed state can be secured. Therefore, when the air-bleeding plug is tightened to be attached to the opening end portion of the case, the annular sealing portion is prevented from protruding from the annular groove and being sandwiched.

In the adjusting screw structure of the oil immersed solenoid according to the present invention, the detachable mechanism may further include a seal supporting surface configured to be formed in an annular shape on the inner peripheral surface of the opening end portion of the case, be located between the pressing inclined surface and the sealing inclined surface, and extend substantially in parallel with a center axis of the air-bleeding plug.

In accordance with the detachable mechanism, with the air-bleeding plug attached to the opening end portion of the case, the annular sealing portion in the annular groove can tightly contact the sealing inclined surface to seal the space in the case. Then, the seal supporting surface formed on the inner peripheral surface of the opening end portion of the case to be located on the opening side of the sealing inclined surface extends substantially in parallel with the center axis of the air-bleeding plug, the length of the gap between the seal supporting surface and the outer peripheral surface of the air-bleeding plug becomes substantially constant at respective positions in a direction along the center axis of the air-bleeding plug. With this, the annular sealing portion can be prevented from being pushed out from the annular groove to the outside by the pressure of the oil in the case.

In the adjusting screw structure of the oil immersed solenoid according to the present invention, the adjusting spring may be a coil spring, a base end portion of the adjusting spring may fit and be attached to a first spring seat formed at a tip end portion of the adjusting screw, a tip end portion of the adjusting spring may fit and be attached to a second spring seat, and each of the first and second spring seats may include a stop convex portion configured to stop a movement in a direction in which the base end portion or tip end portion of the adjusting spring is detached therefrom.

In a case where each of the first and second spring seats includes the stop convex portion configured to stop the movement in a direction in which the base end portion or tip end portion of the adjusting spring is detached therefrom, the adjusting screw, the adjusting spring, and the second spring seat can be comparatively strongly coupled to one another by the stop convex portion. Even when the air-bleeding plug is detached from the opening end portion of the case in a case where the adjusting screw, the adjusting spring, and the second spring seat are comparatively strongly coupled to one another as above, the adjusting screw, the adjusting spring, and the second spring seat are not disassembled and can be prevented from being lost. Then, the adjusting spring is prevented from being sandwiched between the adjusting screw and the inner surface of the opening end portion when the air-bleeding plug is tightened to be attached to the opening end portion of the case after the removal of the air by the operator.

The oil immersed solenoid according to the present invention includes the adjusting screw structure of the present invention.

In accordance with the oil immersed solenoid of the present invention, the adjusting screw structure of the oil immersed solenoid of the present invention is included. Since the oil immersed solenoid of the present invention operates in the same manner as above, an explanation thereof is omitted.

### Advantageous Effects of Invention

In accordance with the adjusting screw structure of the oil immersed solenoid and the oil immersed solenoid of the present invention, the air-bleeding plug can be attached to the opening end portion of the case at a predetermined attachment position in the movement direction of the adjusting screw. Therefore, the air-bleeding plug can be loosened to remove the air in the solenoid without causing the error of the biasing force of the adjusting spring adjusted by the adjusting screw. To be specific, the loosened air-bleeding plug can be put back to the original position when attached to the opening end portion of the case.

With this, the adjustment of the biasing force of the adjusting spring by the adjusting screw and the removal of the air in the solenoid can be easily carried out in a suitable order in actual operations.

Moreover, it is difficult to adjust the biasing force of the adjusting spring in a state where the oil immersed solenoid is mounted on the oil-pressure device, such as the valve device. However, in accordance with the oil immersed solenoid of the present invention, since the error of the biasing force of the adjusting spring does not occur even after the removal of the air, it is unnecessary to adjust the biasing force of the adjusting spring. Therefore, with the oil immersed solenoid mounted on the oil-pressure device, the air can be easily removed by loosing the air-bleeding plug.

### Brief Description of Drawings

[Fig. 1] Fig. 1 is a longitudinal sectional view showing an oil immersed solenoid according to an embodiment of the present invention.
[Fig. 2] Fig. 2 is a side view showing the oil immersed solenoid according to the embodiment.
[Fig. 3] Fig. 3 is an enlarged longitudinal sectional view showing an adjusting screw structure of the oil immersed solenoid according to the embodiment.
[Fig. 4] Fig. 4 is an enlarged longitudinal sectional view showing a detachable structure (portion A shown in Fig. 3) included in the adjusting screw structure according to the embodiment.
[Fig. 5] Fig. 5 is an enlarged longitudinal sectional view showing that an air-bleeding plug of the adjusting screw structure according to the embodiment is loosened to remove air.
[Fig. 6] Fig. 6 is an enlarged longitudinal sectional view showing that the air-bleeding plug of the adjusting screw structure according to the embodiment is tightened (portion B shown in Fig. 5).
[Fig. 7] Fig. 7 is an enlarged longitudinal sectional view showing a first spring seat formed at an adjusting screw of the adjusting screw structure according to the embodiment.
[Fig. 8] Fig. 8 is an enlarged longitudinal sectional view showing that the air-bleeding plug having the adjusting screw of the embodiment is detached from a rear case.
[Fig. 9] Fig. 9 is a longitudinal sectional view showing a conventional oil immersed solenoid.

### Description of Embodiments

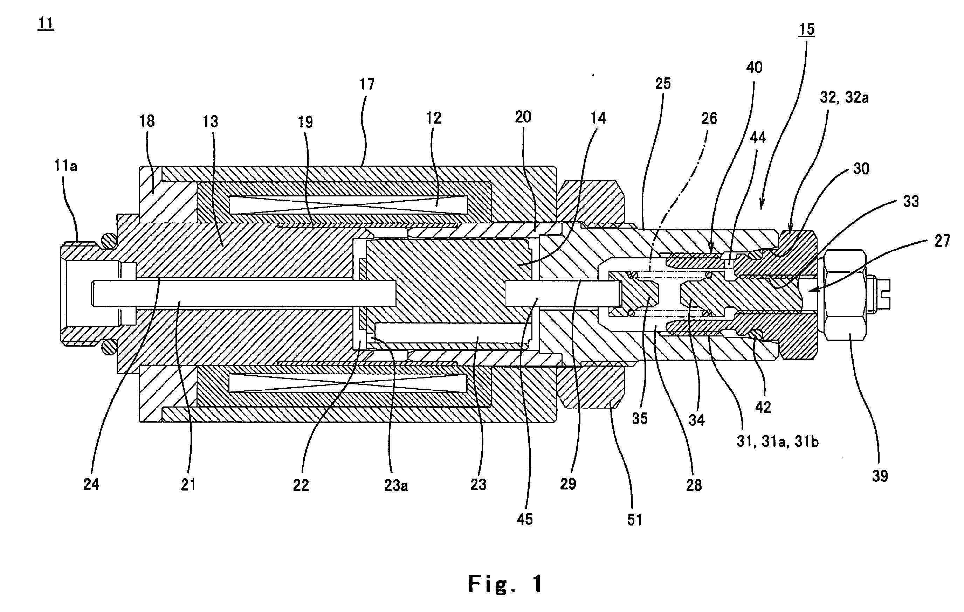

Hereinafter, an embodiment of each of an adjusting screw structure 15 of an oil immersed solenoid according to the present invention and the oil immersed solenoid including the adjusting screw structure 15 will be explained in reference to Figs. 1 to 8. An oil immersed solenoid 11 shown in Fig. 1 is used in a fluid device (oil-pressure device), such as a valve device (not shown), used in a construction machinery (not shown) or the like. The oil immersed solenoid 11 is used to control the oil pressure and flow rate of a fluid, such as operating oil, flowing in the valve device (not shown). For example, the valve device is an electromagnetic proportional relief valve, and the oil immersed solenoid 11 is a proportional solenoid.

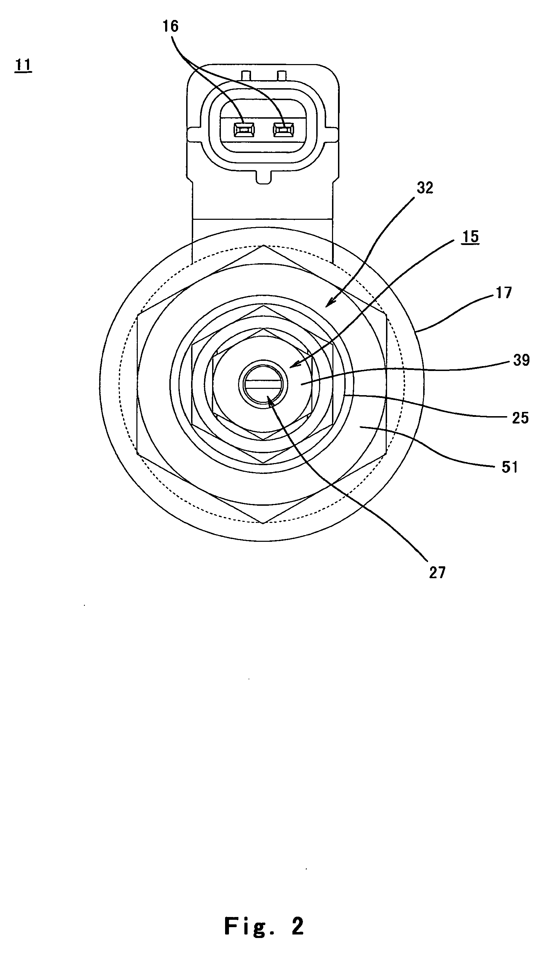

The oil immersed solenoid 11 shown in Fig. 1 includes: an exciting coil 12 to which a command electric signal (exciting current) is transmitted through terminals 16 shown in Fig. 2; a fixed magnetic pole portion 13 at which a magnetic pole is generated by the exciting coil 12; a movable core 14 configured to be suctioned by the fixed magnetic pole portion 13; and the adjusting screw structure 15 of the oil immersed solenoid 11.

The exciting coil 12 shown in Fig. 1 can receive the command electric signal (exciting current) transmitted through the terminals 16 shown in Fig. 2 and generate the magnetic pole at the fixed magnetic pole portion 13 by the command electric signal. The exciting coil 12 shown in Fig. 1 is formed to have a substantially short cylindrical shape and is electrically insulated. The exciting coil 12 is accommodated in a substantially short cylindrical metal main body case 17 and an annular yoke 18.

A controller (not shown) freely adjusts the magnitude of the command electric signal within a predetermined range and transmits the command electric signal to the exciting coil 12. With this, the fixed magnetic pole portion 13 can generate suction force (magnetic pole) corresponding to the magnitude of the command electric signal.

The magnetic pole is generated at the fixed magnetic pole portion 13 by the exciting coil 12, and the fixed magnetic pole portion 13 can suction the movable core 14 by the magnetic pole (suction force in a left direction in Fig. 1). The suction force corresponds to the magnitude of the command electric signal transmitted to the exciting coil 12.

As shown in Fig. 1, the fixed magnetic pole portion 13 is a magnetic body having a substantially short columnar shape and is provided on an inner side of the exciting coil 12 and the like. A tip end portion of an outer peripheral surface of the fixed magnetic pole portion 13 is positioned on an inner side of the yoke 18, and a substantially center portion of the outer peripheral surface of the fixed magnetic pole portion 13 is positioned on an inner side of a tip end portion of the exciting coil 12. Then, a rear end portion of the outer peripheral surface of the fixed magnetic pole portion 13 is positioned on an inner side of a tip end portion of a short cylindrical first guide 19. The first guide 19 is made of a non-magnetic metal.

As shown in Fig. 1, the movable core 14 is formed to have a substantially short columnar shape, provided on an inner side of a short cylindrical second guide 20, and is movable in the left and right directions in Fig. 1(a) along an inner surface of the second guide 20.

To be specific, the movable core 14 receives biasing force in the left direction in Fig. 1 by the suction force of the fixed magnetic pole portion 13. When the movable core 14 is suctioned by the fixed magnetic pole portion 13, a first rod 21 provided at the movable core 14 presses, for example, a spool of a valve device (not shown) in the left direction in Fig. 1. This pressing force balances push-back force (push-back force in the right direction in Fig. 1) based on, for example, spring force or pilot pressure applied to the spool. The spool stops at a position where the pressing force and the push-back force are balanced. With this, the oil pressure and flow rate of, for example, the operating oil flowing in the valve device can be controlled so as to be proportional to the command electric signal.

A tip end portion of an outer peripheral surface of the second guide 20 is positioned on an inner side of a rear end portion of the first guide 19, and a substantially center portion of the outer peripheral surface of the second guide 20 is positioned on an inner side of a rear end portion of the exciting coil 12. Then, a rear end portion of the outer peripheral surface of the second guide 20 is positioned on an inner side of a rear end portion of the main body case 17. The second guide 20 is made of a magnetic metal.

Moreover, as shown in Fig. 1, the fixed magnetic pole portion 13 is coupled to the first guide 19, and the first guide 19 is coupled to the second guide 20. The fixed magnetic pole portion 13 and the second guide 20 are provided to be spaced apart from each other. The movable core 14 is provided in a first space 22 formed in and by the fixed magnetic pole portion 13, the first guide 19, and the second guide 20. The movable core 14 is movable in the first space 22 in the left and right directions in Fig. 1.

Further, as shown in Fig. 1, a through hole 23 and a narrow hole 23a are formed on the movable core 14 so as to extend in parallel with an axial direction of the movable core 14 and open on both end surfaces of the movable core 14. When the movable core 14 moves, the through hole 23 and the narrow hole 23a allow the oil, such as the operating oil, in the first space 22 to flow therethrough, and thus, allow the movable core 14 to perform a low-impact, smooth movement by utilizing fluid resistance of the oil.

As shown in Fig. 1, the first rod 21 is provided at a tip end portion of the movable core 14. The first rod 21 is inserted in a center hole 24 so as to be movable in an axial direction. The center hole 24 is formed to penetrate the center of the fixed magnetic pole portion 13. A tip end portion of the first rod 21 contacts a rear end portion of the spool of the valve device (not shown). Moreover, a tip end portion 11a of the fixed magnetic pole portion 13 is coupled to the valve device.

Moreover, as shown in Fig. 1, a rear case (rear metal member) 25 having a substantially short cylindrical shape is attached to a rear end portion of the second guide 20. Then, the first and second guides 19 and 20 and fixed magnetic pole portion 13, which are coupled to the rear case 25, are fastened and fixed to the main body case 17 by a fixing nut 51. The adjusting screw structure 15 of the oil immersed solenoid 11 is provided at the rear case 25. The rear case 25 and the main body case 17 constitute a case of the oil immersed solenoid 11.

As shown in Fig. 1, the adjusting screw structure 15 can bias the movable core 14 by desired force (force set by an operator) using an adjusting spring 26 in a suction direction (left direction in Fig. 1) in which the fixed magnetic pole portion 13 suctions the movable core 14. Thus, the adjusting screw structure 15 can adjust the force of the first rod 21 provided at the movable core 14, the force pressing the spool of the valve device. The biasing force of the adjusting spring 26 can be adjusted by operating an adjusting screw 27 by the operator.

As above, the pressing force of the first rod 21 with respect to the spool is adjusted in order that the oil pressure and flow rate of the operating oil flowing in the valve device are adjusted to become a predetermined oil pressure and flow rate corresponding to the command electric signal when the command electric signal is transmitted to the exciting coil 12.

As shown in Fig. 1, the adjusting screw structure 15 is provided at the rear case 25 having a short cylindrical shape. A second space 28 formed inside the rear case 25 is communicated with the first space 22 through a center hole 29 formed on the rear case 25 and is also communicated with an opening end portion 30 formed at a rear end portion of the rear case 25. An air-bleeding plug 32 is detachably attached to the opening end portion 30 via a detachable screw portion 31 so as to seal the opening end portion 30.

Moreover, the first space 22 shown in Fig. 1 is communicated with an inner portion of the valve device via the center hole 24 of the fixed magnetic pole portion 13. With this, the operating oil in the valve device flows through the center hole 24, the first space 22, the center hole 29, and the second space 28 to the opening end portion 30.

As shown in Fig. 1, the air-bleeding plug 32 has an internal screw portion 33, and the adjusting screw 27 threadedly engages with the internal screw portion 33. A first spring seat 34 is formed at a tip end portion of the adjusting screw 27, and a rear end portion of the adjusting spring 26 fits and is attached to the first spring seat 34. The adjusting spring 26 is a coil spring, and a tip end portion of the adjusting spring 26 fits and is attached to a second spring seat 35.

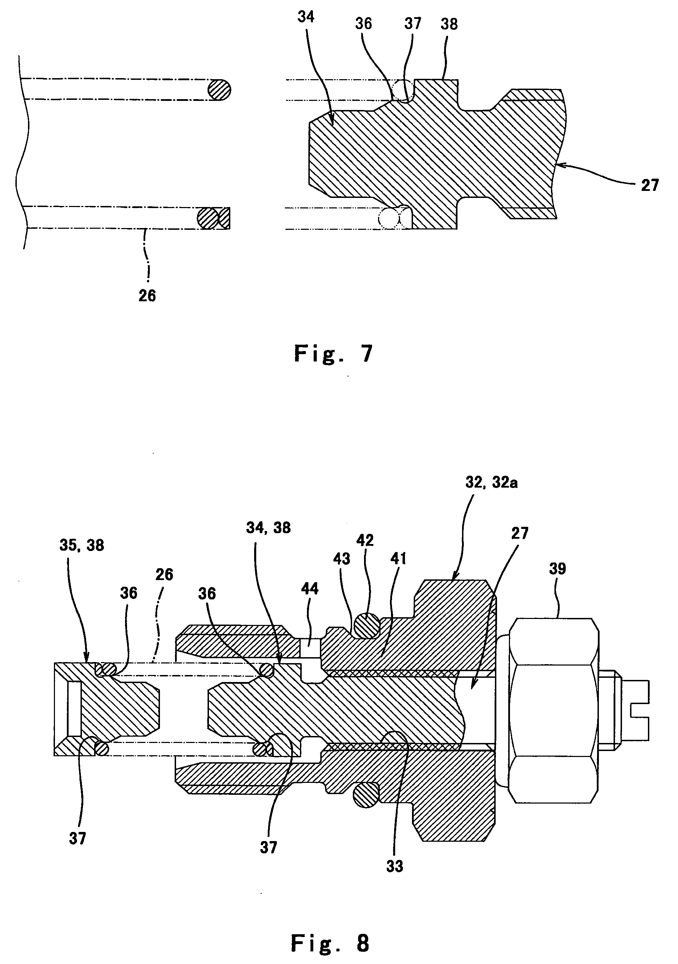

Then, as shown in partially enlarged cross-sectional views of Figs. 7 and 8, each of the first and second spring seats 34 and 35 includes a stop convex portion 36. The stop convex portion 36 stops a movement of the adjusting spring 26 in a direction in which a rear end portion or tip end portion of the adjusting spring 26 is detached therefrom. To be specific, as shown in Fig. 7, in the first spring seat 34, an engagement groove 37 to which the rear end portion of the adjusting spring 26 is attached is formed to have an annular shape, a flange portion 38 is formed at a rear edge portion of the engagement groove 37, and the stop convex portion 36 is formed at a tip end edge portion of the engagement groove 37 to have an annular shape.

As shown in Fig. 8, the second spring seat 35 has the same shape as the first spring seat 34. Therefore, the same reference signs are used for the same components, and explanations thereof are omitted. As shown in Fig. 2, a rear end portion of a second rod 45 fits a concave portion formed on a tip end surface of the second spring seat 35. The second rod 45 is inserted through the center hole 29 formed on the rear case 25, and a tip end portion thereof is coupled to the movable core 14.

Moreover, reference sign 39 shown in Fig. 8 is a seal nut. The seal nut 39 can fix the adjusting screw 27 to the air-bleeding plug 32 and seal a gap between the adjusting screw 27 and the internal screw portion 33 in a fixed state.

Next, a detachable mechanism 40 configured to detachably attach the air-bleeding plug 32 to the opening end portion 30 of the rear case 25 will be explained in reference to Figs. 2 to 8.

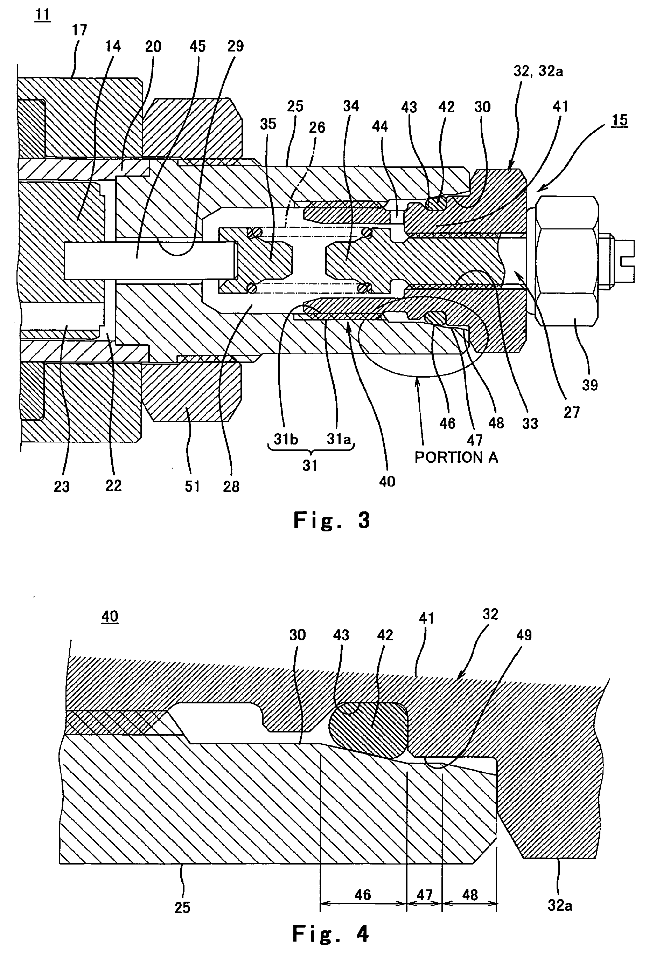

As shown in Figs. 2 and 3, the air-bleeding plug 32 of the detachable mechanism 40 includes a flange portion 32a having a substantially hexagonal plate shape. A plug main body 41 is provided on a tip end surface of the flange portion 32a. Then, a tip end portion of the plug main body 41 is detachably attached to an inner peripheral surface of the rear case 25 via the detachable screw portion 31. The detachable screw portion 31 includes a detachable external screw portion 31a formed at the tip end portion of the plug main body 41 and a detachable internal screw portion 31b formed on the inner peripheral surface of the rear case 25.

As shown in Fig. 3, when the air-bleeding plug 32 threadedly engages with the rear case 25 by the detachable screw portion 31, a front surface of the flange portion 32a contacts a tip end surface of the opening end portion 30 of the rear case 25. This is an attachment position at which the air-bleeding plug 32 is attached to the opening end portion 30 of the rear case 25. Thus, the air-bleeding plug 32 can be positioned at a predetermined attachment position in a movement direction (forward and backward directions) of the adjusting screw 27 to be attached to the opening end portion 30 of the rear case 25.

As shown in Figs. 3 and 4 (portion A of Fig. 3), an annular sealing portion 42, such as an O ring, is attached to an outer peripheral surface of the plug main body 41 of the air-bleeding plug 32 so as to be spaced apart from the flange portion 32a. The annular sealing portion 42 is attached in an annular groove 43 formed on the outer peripheral surface of the plug main body 41.

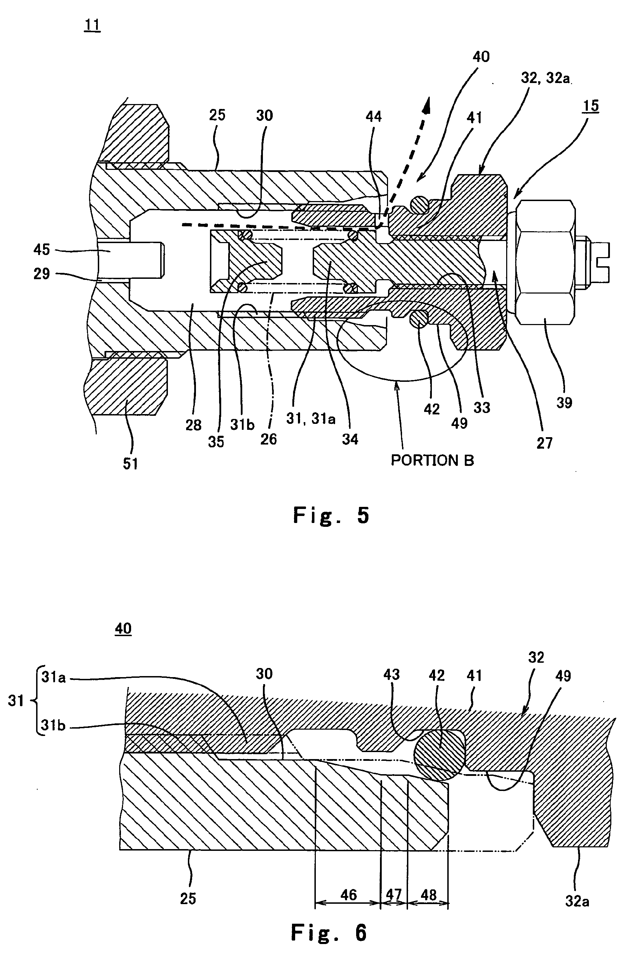

Moreover, as shown in Fig. 3, one or a plurality of air-bleeding holes 44 are formed between the annular sealing portion 42 and the detachable external screw portion 31 a in the plug main body 41. As shown in Fig. 5, the air-bleeding hole 44 can allow the second space 28 in the rear case 25 and the outside of the oil immersed solenoid 11 to be communicated with each other in a state where the air-bleeding plug 32 is loosened but threadedly engages with the rear case 25. Therefore, with the air-bleeding plug 32 loosened, the air-bleeding hole 44 can allow the first and second spaces 22 and 28, the center hole 29, and the outside of the solenoid 11 to be communicated with one another.

Further, as shown in Fig. 4, a sealing inclined surface 46, a seal supporting surface 47, and a pressing inclined surface 48 are formed on an inner peripheral surface of the opening end portion 30 of the rear case 25 in this order from a far side of the rear case 25.

As shown in Fig. 4, each of the sealing inclined surface 46 and the pressing inclined surface 48 is formed on the inner peripheral surface of the opening end portion 30 of the case so as to have an annular shape. An inner diameter of each of the sealing inclined surface 46 and the pressing inclined surface 48 increases toward the opening. The pressing inclined surface 48 is formed to have a larger diameter than the sealing inclined surface 46.

To be specific, a small-diameter edge portion of the pressing inclined surface 48 is substantially the same in diameter as a large-diameter edge portion of the sealing inclined surface 46. The seal supporting surface 47 is formed between the sealing inclined surface 46 and the pressing inclined surface 48 and is substantially the same in diameter as the large-diameter edge portion of the sealing inclined surface 46. The seal supporting surface 47 is formed to have a short cylindrical shape extending substantially in parallel with a center axis of the air-bleeding plug 32. Moreover, each of the sealing inclined surface 46 and the pressing inclined surface 48 is inclined at about 15° (for example, 10° to 20°) to the center axis of the air-bleeding plug 32.

As shown in Fig. 4, the sealing inclined surface 46 is formed to tightly contact the annular sealing portion 42 in a state where the air-bleeding plug 32 is attached at a predetermined attachment position of the opening end portion 30. Then, the seal supporting surface 47 is formed to be opposed to and spaced apart from an outer peripheral surface portion 49 of the plug main body 41. The outer peripheral surface portion 49 opposed to the seal supporting surface 47 is formed between the annular groove 43 to which the annular sealing portion 42 is attached and the flange portion 32a.

As shown in Fig. 6 (portion B of Fig. 5), the pressing inclined surface 48 is formed to contact the annular sealing portion 42 and press the annular sealing portion 42 into the annular groove 43 when the air-bleeding plug 32 is tightened to threadedly engage with the opening end portion 30 of the rear case 25.

To be specific, when the air-bleeding plug 32 is tightened into the opening end portion 30 of the rear case 25, the annular sealing portion 42 is prevented from protruding from the annular groove 43 and being sandwiched between the rear end portion of the rear case 25 and the flange portion 32a.

Next, the operations of the oil immersed solenoid 11 and adjusting screw structure 15 configured as above and shown in Fig. 1 and the like will be explained. The oil immersed solenoid 11 shown in Fig. 1 can be used to control the oil pressure and flow rate of a fluid, such as operating oil, flowing in a valve device (not shown) that is, for example, an oil-pressure device. To be specific, in the oil immersed solenoid 11, when the command electric signal (exciting current) is transmitted to the exciting coil 12, suction force (suction force in the left direction in Fig. 1) corresponding to the magnitude of the command electric signal is generated at the fixed magnetic pole portion 13, and the fixed magnetic pole portion 13 can suction the movable core 14 by the suction force.

When the movable core 14 is suctioned, the first rod 21 provided at the movable core 14 presses the spool of the valve device (not shown) in the left direction in Fig. 1. The pressing force balances the push-back force (push-back force in the right direction in Fig. 1) based on, for example, the spring force or pilot pressure applied to the spool. The spool stops at a position where the pressing force and the push-back force are balanced. With this, the oil pressure and flow rate of the operating oil flowing in the valve device can be controlled to be proportional to the command electric signal.

Even among the standardized oil immersed solenoids 11 shown in Fig. 1, each solenoid 11 has its own characteristics, and the sizes of the parts constituting the solenoids 11 vary. Therefore, even if the same command electric signal is transmitted, the pressure and flow rate of the operating oil vary. Therefore, the variations of each of the pressure and flow rate need to be kept within an allowable range.

Here, the operator can adjust the biasing force of the adjusting spring 26 by rotating the adjusting screw 27 of Fig. 1 in a direction in which the adjusting screw 27 is tightened or loosened. By adjusting the biasing force of the adjusting spring 26, it is possible to adjust the biasing force in a direction (left direction in Fig. 1) in which the movable core 14 moves toward the fixed magnetic pole portion 13. With this, the oil pressure and flow rate of the operating oil or the like flowing in, for example, the valve device in which the oil immersed solenoid 11 is used can be adjusted by the adjusting screw 27 in advance or accordingly such that each of the oil pressure and flow rate falls within a predetermined allowable range.

Moreover, if the air and the air bubbles exist in the oil, such as operating oil, in the first space 22 of the oil immersed solenoid 11 shown in Fig. 1, this may cause irregular change in movement acceleration of the movable core 14, and chattering of the movable core 14 may occur.

Here, in order to remove the air and the air bubbles in the first space 22 of solenoid 11, the operator loosens the air-bleeding plug 32 as shown in Fig. 5, so that the air and the air bubbles in the oil in the first space 22 can be removed through the second space 28 of the plug main body 41 and the air-bleeding hole 44 to the opening end portion 30 of the rear case 25 as shown by a broken line in Fig. 5.

When removing the air and the like in the first space 22, for example, the oil, such as the operating oil, can be supplied through the tip end portion 11 a of the solenoid 11 to cause the air and the like in the first space 22 to flow out through the opening end portion 30 of the rear case 25.

Moreover, as shown in Fig. 3, when the air-bleeding plug 32 is attached to the opening end portion 30 of the rear case 25, the air-bleeding plug 32 is positioned such that the flange portion 32a contacts a tip end of the opening end portion 30. Thus, the air-bleeding plug 32 can be attached at a predetermined attachment position in the movement direction (forward and backward direction) of the adjusting screw 27. In addition, even if the air-bleeding plug 32 is attached to and detached from the opening end portion 30, a positional relation between the adjusting screw 27 and the air-bleeding plug 32 does not change. With this, the adjusting screw 27 can be put back to the original position by attaching the air-bleeding plug 32 at the predetermined attachment position of the opening end portion 30.

Therefore, even if the air is removed by loosening the air-bleeding plug 32, the error of the biasing force of the adjusting spring 26 adjusted by the adjusting screw 27 does not occur, so that it is unnecessary to readjust the adjusting screw 27.

Therefore, the adjustment of the biasing force of the adjusting spring 26 by the adjusting screw 27 and the removal of the air in the solenoid 11 can be easily carried out in a suitable order in actual operations.

Moreover, it is difficult to adjust the biasing force of the adjusting spring 26 in a state where the oil immersed solenoid 11 is mounted on the oil-pressure device, such as the valve device. However, in the oil immersed solenoid 11 of the present embodiment, the error of the biasing force of the adjusting spring 26 does not occur even if the air is removed. Therefore, it is unnecessary to adjust the biasing force of the adjusting spring 26. On this account, in accordance with the oil immersed solenoid 11, the removal of the air can be easily carried out by loosening the air-bleeding plug 32 in a state where the oil immersed solenoid 11 is mounted on the oil-pressure device.

Further, as shown in Figs. 3 and 4, in accordance with the detachable mechanism 40 of the adjusting screw structure 15, the air-bleeding plug 32 can threadedly engage with the opening end portion 30 of the rear case 25 by the detachable screw portion 31 to be attached at the predetermined attachment position. Then, with the air-bleeding plug 32 attached at the predetermined attachment position, the annular sealing portion 42 attached to an outer peripheral surface of the air-bleeding plug 32 can tightly contact the sealing inclined surface 46 formed on the inner peripheral surface of the opening end portion 30 of the rear case 25 to seal the second space 28 of the rear case 25 and prevent the oil in the rear case 25 from leaking.

As shown in Fig. 5, the inner diameter of the sealing inclined surface 46 increases toward the opening of the opening end portion 30. Therefore, by loosening the air-bleeding plug 32, a gap is formed between the sealing inclined surface 46 and the annular sealing portion 42. Thus, the air and the like in the first and second spaces 22 and 28 can be efficiently discharged through this gap to the outside.

Moreover, when removing the air in the first and second spaces 22 and 28, the air-bleeding plug 32 may be loosened, and it is unnecessary to detach the air-bleeding plug 32 from the opening end portion 30. Therefore, the adjusting spring 26 and the second spring seat 35 in the rear case 25 do not flow out through the opening end portion 30 together with the oil and there is no possibility of losing the adjusting spring 26 and the second spring seat 35. Then, the adjusting spring 26 is prevented from being sandwiched between the adjusting screw 27 and the inner surface of the opening end portion 30 when the air-bleeding plug 32 is tightened to the opening end portion 30 of the case after the removal of the air by the operator.

Further, in accordance with the detachable mechanism 40, as shown in Fig. 6, when the operator tightens the air-bleeding plug 32 such that the air-bleeding plug 32 threadedly engages with the opening end portion 30 of the rear case 25, the pressing inclined surface 48 formed on the inner peripheral surface of the opening end portion 30 of the rear case 25 to have an annular shape can press the annular sealing portion 42 attached to the air-bleeding plug 32 into the annular groove 43. Then, when the air-bleeding plug 32 is further tightened up to the predetermined attachment position, as shown in Fig. 4, the annular sealing portion 42 attached to the air-bleeding plug 32 can tightly contact the sealing inclined surface 46 formed on the inner peripheral surface of the opening end portion 30 of the rear case 25 to seal the second space 28 of the rear case 25. As above, the air-bleeding plug 32 can be attached to the opening end portion 30 of the rear case 25 with the annular sealing portion 42 not protruding from the annular groove 43, and the sealed state can be secured.

Then, as shown in Fig. 4, in a state where the air-bleeding plug 32 is attached to the opening end portion 30 of the rear case 25, and the annular sealing portion 42 in the annular groove 43 tightly contacts the sealing inclined surface 46 to seal the second space 28 in the rear case 25, the seal supporting surface 47 is spaced apart from the outer peripheral surface portion 49 of the plug main body 41 to be in parallel with the outer peripheral surface portion 49, and each of the seal supporting surface 47 and the outer peripheral surface portion 49 of the plug main body 41 is substantially in parallel with the center axis of the air-bleeding plug 32.

In accordance with this configuration, the length of the gap between the seal supporting surface 47 and the outer peripheral surface portion 49 of the plug main body 41 becomes substantially constant at respective positions in a direction along the center axis of the air-bleeding plug 32. Therefore, it is possible to prevent the annular sealing portion 42 from being pushed out from the annular groove 43 to the outside by the oil pressure in the second space 28 of the rear case 25.

Moreover, as shown in Figs. 7 and 8, each of the first spring seat 34 of the adjusting screw 27 and the second spring seat 35 includes the stop convex portion 36 configured to stop the movement of the adjusting spring 26 in a direction in which the rear end portion or tip end portion of the adjusting spring 26 is detached therefrom. Therefore, the adjusting screw 27, the adjusting spring 26, and the second spring seat 35 can be comparatively strongly coupled to one another by the stop convex portions 36. Even when the air-bleeding plug 32 is detached from the opening end portion 30 of the rear case 25 in a case where the adjusting screw 27, the adjusting spring 26, and the second spring seat 35 are comparatively strongly coupled to one another as above, the adjusting screw 27, the adjusting spring 26, and the second spring seat 35 are not disassembled and can be prevented from being lost. Then, the adjusting spring 26 is prevented from being sandwiched between the adjusting screw 27 and the internal screw portion 33 on the inner surface of the opening end portion 30 when the air-bleeding plug 32 is tightened to be attached to the opening end portion 30 of the rear case 25 after the removal of the air by the operator.

Further, as shown in Fig. 1, since the adjusting screw 27, the air-bleeding plug 32, the movable core 14, and the first and second rods 21 and 45 are provided on the same straight line, the configuration of the oil immersed solenoid 11 becomes simple. Then, the operator can maintain the same posture toward the air-bleeding plug 32 when carrying out the removal of the air and the adjustment of the biasing force with respect to the movable core 14 by the adjusting screw 27. Therefore, the workability is excellent.

In the above embodiment, as shown in Figs. 5 and 6, although the sealing inclined surface 46, the seal supporting surface 47, and the pressing inclined surface 48 are formed on the inner peripheral surface of the opening end portion 30 of the rear case 25 and the air-bleeding hole 44 is formed on the air-bleeding plug 32, these may be omitted. In this case, when removing the air and the air bubbles in the first and second spaces 22 and 28, the air-bleeding plug 32 may be loosened to remove the air and the like through a gap at the detachable screw portion 31 or the air-bleeding plug 32 may be detached from the rear case 25 to remove the air and the like.

Then, in the above embodiment, as shown in Fig. 1, the adjusting spring 26 is a compression coil spring configured to bias the movable core 14 in a direction in which the movable core 14 is suctioned by the fixed magnetic pole portion 13. Instead of this, the adjusting spring 26 may be a tension coil spring configured to bias the movable core 14 in a direction opposite to the above suction direction.

### Reference Signs List

- 11: oil immersed solenoid
- 11a: tip end portion
- 12: exciting coil
- 13: fixed magnetic pole portion
- 14: movable core
- 15: adjusting screw mechanism
- 16: terminal
- 17: main body case
- 18: yoke
- 19: first guide
- 20: second guide
- 21: first rod
- 22: first space
- 23: through hole
- 23a: narrow hole
- 24, 29: center hole
- 25: rear case
- 26: adjusting spring
- 27: adjusting screw
- 28: second space
- 30: opening end portion
- 31: detachable screw portion
- 31a: detachable external screw portion
- 31b: detachable internal screw portion
- 32: air-bleeding plug
- 32a, 38: flange portion
- 33: internal screw portion
- 34: first spring seat
- 35: second spring seat
- 36: stop convex portion
- 37: engagement groove
- 39: seal nut
- 40: detachable mechanism
- 41: plug main body
- 42: annular sealing portion
- 43: annular groove
- 44: air-bleeding hole
- 45: second rod
- 46: sealing inclined surface
- 47: seal supporting surface
- 48: pressing inclined surface
- 49: outer peripheral surface portion
- 51: fixing nut

## Claims

1. An adjusting screw structure (15) of an oil immersed solenoid (11) in which: a movable core (14) is provided in a space (28) of a case (25) so as to be movable in an axial direction; the movable core (14) is biased by an adjusting spring (26) in a direction in which the movable core (14) is suctioned by a fixed magnetic pole portion (13) or in an opposite direction thereof; and an adjusting screw (27) capable of adjusting biasing force of the adjusting spring (26) is included,
the adjusting screw structure (15) comprising an air-bleeding plug (32) configured to be detachably attached to and seal an opening end portion (30) of the case (25), the opening end portion (30) being communicated with the space (28) of the case (25), wherein:
the air-bleeding plug (32) includes an internal screw portion (33) with which the adjusting screw (27) threadedly engages and a detachable mechanism (40) configured to be able to attach the air-bleeding plug (32) to the opening end portion (30) of the case (25) such that the air-bleeding plug (32) is located at a predetermined attachment position in a movement direction of the adjusting screw (27); and
the detachable mechanism (40) includes
a detachable screw portion (31) configured to attach the air-bleeding plug (32) to the opening end portion (30) of the case (25) such that the air-bleeding plug (32) threadedly engages with the opening end portion (30),
an annular sealing portion (42) configured to be attached to an annular groove (43) formed on an outer peripheral surface of the air-bleeding plug (32);
a sealing inclined surface (46) configured to be formed in an annular shape on an inner peripheral surface of the opening end portion (30) of the case (25), having an inner diameter increasing in size toward the opening, and tightly contacting the annular sealing portion (42) when the air-bleeding plug (32) is attached at an attachment position of the opening end portion (30), and
an air-bleeding hole (44) configured to be formed on the air-bleeding plug (32) and allow the space (28) of the case (25) and an outside of the oil immersed solenoid (11) to be communicated with each other when the air-bleeding plug (32) is loosened.

2. The adjusting screw structure (15) according to claim 2, wherein the detachable mechanism (40) further includes a pressing inclined surface (48) configured to be formed in an annular shape on the inner peripheral surface of the opening end portion (30) of the case (25), having an inner diameter increasing in size toward the opening, be located on an opening side of the sealing inclined surface (46), and pressing the annular sealing portion (42) into the annular groove (43) when the air-bleeding plug (32) threadedly engages with the opening end portion (30) of the case (25) to be tightened into the opening end portion (30).

3. The adjusting screw structure (15) according to claim 3, wherein the detachable mechanism (40) further includes a seal supporting surface (47) configured to be formed in an annular shape on the inner peripheral surface of the opening end portion (30) of the case (25), be located between the pressing inclined surface (48) and the sealing inclined surface (46), and extend substantially in parallel with a center axis of the air-bleeding plug (32).

4. The adjusting screw structure (15) according to claim 1, wherein: the adjusting spring (26) is a coil spring; a base end portion of the adjusting spring (26) fits and is attached to a first spring seat (34) formed at a tip end portion of the adjusting screw (27); a tip end portion of the adjusting spring (26) fits and is attached to a second spring seat (35); and each of the first and second spring seats (34, 35) includes a stop convex portion (36) configured to stop a movement in a direction in which the base end portion or tip end portion of the adjusting spring (26) is detached therefrom.

5. An oil immersed solenoid (11) comprising the adjusting screw structure (15) according to any one of claims 1 to 4.

## Patentansprüche

1. Stellschraubenstruktur (15) für einen in Öl getauchten Elektromagneten (11), bei der: ein beweglicher Kern (14) in einem Zwischenraum (28) eines Gehäuses (25) derart angeordnet ist, dass er in einer axialen Richtung bewegt werden kann; der bewegliche Kern (14) durch eine Stellfeder (26) in eine Richtung, in die der bewegliche Kern (14) durch einen feststehenden Magnetpolabschnitt (13) angezogen wird, oder in eine entgegengesetzte Richtung davon vorgespannt ist; und eine Stellschraube (27), die in der Lage ist, eine Vorspannkraft der Stellfeder (26) einzustellen, inbegriffen ist,
die Stellschraubenstruktur (15) einen Entlüftungsstecker (32) umfasst, der dazu konfiguriert ist, abnehmbar an einem Öffnungsendabschnitt (30) des Gehäuses (25) befestigt zu sein und diesen abzudichten, wobei der Öffnungsendabschnitt (30) in Verbindung mit dem Zwischenraum (28) des Gehäuses (25) steht, wobei:
der Entlüftungsstecker (32) einen internen Schraubenabschnitt (33), mit dem die Stellschraube (27) in Gewindeeingriff gebracht wird, und einen abnehmbaren Mechanismus (40) umfasst, der dazu konfiguriert ist, den Entlüftungsstecker (32) an dem Öffnungsendabschnitt (30) des Gehäuses (25) derart befestigen zu können, dass der Entlüftungsstecker (32) sich an einer vorbestimmten Befestigungsposition in einer Bewegungsrichtung der Stellschraube (27) befindet; und
der abnehmbare Mechanismus (40) umfasst:
einen abnehmbaren Schraubenabschnitt (31), der dazu konfiguriert ist, den Entlüftungsstecker (32) an dem Öffnungsendabschnitt (30) des Gehäuses (25) derart zu befestigen, dass der Entlüftungsstecker (32) mit dem Öffnungsendabschnitt (30) in Gewindeeingriff gebracht wird;
einen ringförmigen Dichtungsabschnitt (42), der dazu konfiguriert ist, an einer ringförmigen Vertiefung (43), die an einer äußeren Umfangsfläche des Entlüftungssteckers (32) ausgeformt ist, befestigt zu werden;
eine geneigte Dichtungsfläche (46), die dazu konfiguriert ist, in einer ringförmigen Form an einer inneren Umfangsfläche des Öffnungsendabschnitts (30) des Gehäuses (25) ausgeformt zu sein, einen Innendurchmesser aufzuweisen, der sich in Richtung der Öffnung vergrößert und mit dem ringförmigen Dichtungsabschnitt (42) in engem Kontakt zu stehen, wenn der Entlüftungsstecker (32) an einer Befestigungsposition des Öffnungsendabschnitts (30) befestigt ist; und
ein Entlüftungsloch (44), das dazu konfiguriert ist, an dem Entlüftungsstecker (32) ausgeformt zu sein und zu ermöglichen, dass der Zwischenraum (28) des Gehäuses (25) und eine Außenseite des in Öl getauchten Elektromagneten (11) miteinander in Verbindung stehen, wenn der Entlüftungsstecker (32) gelockert ist.

2. Stellschraubenstruktur (15) gemäß Anspruch 2, wobei der abnehmbare Mechanismus (40) weiterhin eine geneigte Druckfläche (48) umfasst, die dazu konfiguriert ist, in einer ringförmigen Form an der inneren Umfangsfläche des Öffnungsendabschnitts (30) des Gehäuses (25) ausgeformt zu sein, einen Innendurchmesser aufzuweisen, der sich in Richtung der Öffnung vergrößert, sich an der Öffnungsseite der geneigten Dichtungsfläche (46) zu befinden und den ringförmigen Dichtungsabschnitt (42) in die ringförmige Vertiefung (43) zu drücken, wenn der Entlüftungsstecker (32) mit dem Öffnungsendabschnitt (30) des Gehäuses (25) in Gewindeeingriff gebracht wird, um in den Öffnungsendabschnitt (30) fest eingepasst zu werden.

3. Stellschraubenstruktur (15) gemäß Anspruch 2, wobei der abnehmbare Mechanismus (40) weiterhin eine Dichtungsstützfläche (47) umfasst, die dazu konfiguriert ist, in einer ringförmigen Form an der inneren Umfangsfläche des Öffnungsendabschnitts (30) des Gehäuses (25) ausgeformt zu sein, zwischen der geneigten Druckfläche (48) und der geneigten Dichtungsfläche (46) angeordnet zu sein, und sich im Wesentlichen parallel zu einer zentralen Achse des Entlüftungssteckers (32) zu erstrecken.

4. Stellschraubenstruktur (15) gemäß Anspruch 1, wobei: es sich bei der Stellfeder (26) um eine Schraubenfeder handelt; ein Basisendabschnitt der Stellfeder (26) in einen ersten Federsitz (34), der an einem Spitzenendabschnitt der Stellschraube (27) ausgeformt ist, passt und an diesem befestigt ist; der Spitzenendabschnitt der Stellfeder (26) in einen zweiten Federsitz (35) passt und an diesem befestigt ist; und sowohl der erste, als auch der zweite Federsitz (34, 35) einen konvexen Stoppabschnitt (36) umfasst, der dazu konfiguriert ist, eine Bewegung in eine Richtung, in die der Basisendabschnitt oder der Spitzenendabschnitt der Stellfeder (26) davon abgenommen wird, zu stoppen.

5. In Öl getauchter Elektromagnet (11), der die Stellschraubenstruktur (15) gemäß einem der Ansprüche 1 bis 4 umfasst.

## Revendications

1. Structure de vis de réglage (15) d'un solénoïde immergé dans l'huile (11) dans laquelle : un noyau mobile (14) est agencé dans l'espace (28) d'un carter (25) de manière à être mobile dans le sens axial ; le noyau mobile (14) étant sollicité par un ressort de réglage (26) dans le sens dans lequel le noyau mobile (14) est attiré par une partie de pôle magnétique fixe (13) ou dans le sens opposé ; et une vis de réglage (27) est prévue pour régler la force de sollicitation du ressort de réglage (26),
la structure de vis de réglage (15) comprenant un bouchon de purge d'air (32) configuré pour être fixé de manière amovible sur une partie d'extrémité d'ouverture (30) du carter (25) pour la fermer, la partie d'extrémité d'ouverture (30) étant en communication avec l'espace (28) du carter (25), en sachant que :
le bouchon de purge d'air (32) comporte une partie de vis interne (33) avec laquelle la vis de réglage (27) coopère par filetage, et un mécanisme amovible (40) configuré pour pouvoir fixer le bouchon de purge d'air (32) sur la partie d'extrémité d'ouverture (30) du carter (25) de manière que le bouchon de purge d'air (32) est situé en un emplacement de fixation prédéterminé dans le sens de déplacement de la vis de réglage (27) ; et
le mécanisme amovible (40) comporte :
une partie de vissage amovible (31) configurée pour fixer le bouchon de purge d'air (32) sur la partie d'extrémité d'ouverture (30) du carter (25) de manière que le bouchon de purge d'air (32) coopère par filetage avec la partie d'extrémité d'ouverture (30) ;
une partie de joint annulaire (42) configurée pour être fixée sur une rainure annulaire (43) constituée sur une surface périphérique extérieure du bouchon de purge d'air (32) ;
une surface pentue d'étanchéité (46) configurée pour être constituée selon une forme annulaire sur une surface périphérique intérieure de la partie d'extrémité d'ouverture (30) du carter (25), en présentant un diamètre intérieur allant en augmentant vers l'ouverture, et en contact étroit avec la partie de joint annulaire (42) lorsque le bouchon de purge d'air (32) est fixé en un emplacement de fixation de la partie d'extrémité d'ouverture (30) ; et
un orifice de purge d'air (44) configuré pour être constitué sur le bouchon de purge d'air (32) et pour permettre à l'espace (28) du carter (25) et à l'extérieur du solénoïde immergé dans l'huile (11) d'être en communication l'un avec l'autre lorsque le bouchon de purge d'air (32) est desserré.

2. Structure de vis de réglage (15) selon la revendication 2, dans laquelle le mécanisme amovible (40) comporte en outre une surface pentue de pression (48) configurée pour être constituée selon une forme annulaire sur la surface périphérique intérieure de la partie d'extrémité d'ouverture (30) du carter (25), en présentant un diamètre intérieur allant en augmentant vers l'ouverture, en étant située sur un côté d'ouverture de la surface pentue d'étanchéité (46), et comprimant la partie de joint annulaire (42) dans la rainure annulaire (43) lorsque le bouchon de purge d'air (32) coopère par filetage avec la partie d'extrémité d'ouverture (30) du carter (25) pour être serré dans la partie d'extrémité d'ouverture (30).

3. Structure de vis de réglage (15) selon la revendication 2, dans laquelle le mécanisme amovible (40) comporte en outre une surface de support de joint (47) configurée pour être constituée selon une forme annulaire sur la surface périphérique intérieure de la partie d'extrémité d'ouverture (30) du carter (25), pour être située entre la surface pentue de pression (48) et la surface pentue d'étanchéité (46), et pour s'étendre de manière sensiblement parallèle à l'axe central du bouchon de purge d'air (32).

4. Structure de vis de réglage (15) selon la revendication 1, dans laquelle : le ressort de réglage (26) est un ressort hélicoïdal ; une partie terminale de base du ressort de réglage (26) est emboîtée et fixée sur un premier siège de ressort (34) constitué sur une partie terminale de pointe de la vis de réglage (27) ; une partie terminale de tête du ressort de réglage (26) est emboîtée et fixée sur un second siège de ressort (35) ; et chacun des premier et second sièges de ressort (34, 35) comporte une partie de butée convexe (36) configurée pour arrêter le déplacement dans un sens dans lequel la partie terminale de base ou la partie terminale de tête du ressort de réglage (26) s'en détache.

5. Solénoïde immergé dans l'huile (11) comprenant la structure de vis de réglage (15) selon l'une quelconque des revendications 1 à 4.
